# EUROPEAN PATENT APPLICATION

(11) **EP 3 162 204 A1**
(43) Date of publication of application: **03.05.2017**
(21) Application number: 16196092.7
(22) Date of filing: 27.10.2016
(51) Int. Cl.: A01M 1/14

(54) **PEST TRAP**

(30) Priority: 28.10.2015 GB 201519043
(71) Applicant: Pelsis Limited, Grimbald Crag Close Knaresborough North Yorkshire HG5 8PJ (GB)
(72) Inventor: HOLMES, Tom, Knaresborough, North Yorkshire HG5 8PJ (GB)
(74) Representative: Appleyard Lees IP LLP

(57) **Abstract**

A flying pest trap comprises an attraction section (16), an immobilisation section (12), a body section (10) adapted to retain the attraction section (16) and the immobilisation section (12), and a power section (20) adapted to provide power to the attraction section (16), wherein the immobilisation section (12) incorporates a glueboard (42) having a silvered exterior face on a substrate thereof, and a layer of adhesive is located on the silvered exterior face.

## Description

This invention relates to a flying pest trap and to an immobilisation section therefore.

A flying pest trap typically comprises a housing containing an attraction section, such as an electrically powered light source that emits UV light (usually in addition to visible light), and an immobilisation section, such as a glueboard (usually a board carrying an adhesive that retains the pests when they make contact with the glueboard.

The light source, in particular the colour thereof, is typically chosen to offer the broadest attraction to the widest range of flying pests likely to be encountered.

The flying pest trap functions by attracting flying pests, such as insects, including various types of fly and moth, to the light source. When in the vicinity of the light source the pest will explore the area and come into contact with the glueboard and thereby become immobilised. The glueboard can periodically be replaced when it becomes loaded with trapped pests.

Efficiency and power consumption are factors that affect the cost of running a pest trap.

It is an object of the present invention to address the above mentioned issues.

According to the present invention there is provided an apparatus and method as set forth in the appended claims. Other features of the invention will be apparent from the dependent claims, and the description which follows.

According to an aspect of the present invention there is provided a flying pest trap comprising an attraction section, an immobilisation section, a body section adapted to retain the attraction section and the immobilisation section, and a power section adapted to provide power to the attraction section, wherein the reflective irradiance of the immobilisation section is at least 0.25 microWatts per square centimetre when measured by the indirect test rig described herein.

The reflective irradiance of the immobilisation section may be the reflective irradiance of a glueboard of the immobilisation section.

The reflective irradiance of the immobilisation section may be at least 0.5 microWatts per square centimetre. The reflective irradiance of the immobilisation section may be at least 0.75 microWatts per square centimetre. The reflective irradiance of the immobilisation section may be at least 1.0 microWatts per square centimetre. The reflective irradiance of the immobilisation section may be at least 1.25 microWatts per square centimetre. The reflective irradiance of the immobilisation section may be at least 1.5 microWatts per square centimetre. The reflective irradiance of the immobilisation section may be at least 1.75 microWatts per square centimetre. The reflective irradiance of the immobilisation section may be at least 2.0 microWatts per square centimetre.

According to an aspect of the present invention there is provided a flying pest trap comprising an attraction section, an immobilisation section, a body section adapted to retain the attraction section and the immobilisation section, and a power section adapted to provide power to the attraction section, wherein the immobilisation section incorporates a glueboard having a silvered exterior face on a substrate thereof, and a layer of adhesive is located on the silvered exterior face.

The silvered exterior face may be a metalized layer. The silvered exterior face may be an aluminium layer, which may be an aluminium foil layer. The silvered exterior face may be under a transparent cover layer.

The substrate may include support layer, which may be card or cardboard material.

The attraction section may incorporate a light source, which may be a light source chosen for emitting UV light as a source of attraction. The attraction section may include a plurality of said light sources.

The immobilisation section may include an adhesive panel, or glueboard, as a means of immobilisation.

According to another aspect of the present invention there is provided an immobilisation element for a flying pest trap, the immobilisation element comprising a backing section and an adhesive section applied to a front face of the backing section, wherein the reflective irradiance of the immobilisation section is at least 0.25 microWatts per square centimetre when measured by the indirect test rig described herein.

According to another aspect of the present invention there is provided an immobilisation element for a flying pest trap, the immobilisation element comprising a backing section and an adhesive section applied to a front face of the backing section, wherein the immobilisation section incorporates a glueboard having a silvered exterior face on a substrate thereof, and a layer of adhesive is located on the silvered exterior face.

All of the features described herein can be combined with any of the above aspects in any combination.

For a better understanding of the invention and to show how the same may be brought into effect, embodiments of the same will now be described with reference to the accompanying drawings, in which:
Figure 1 is a schematic perspective front view of a pest trap according to the invention;

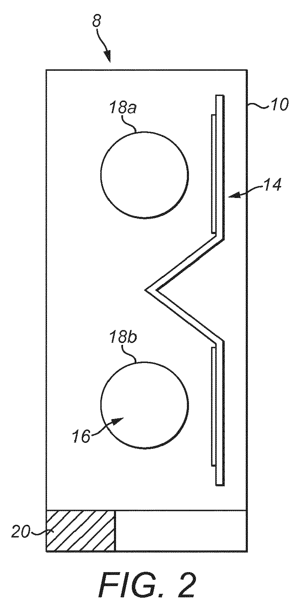

Figure 2 is a schematic cut-away side view of the pest trap of Figure 2;
Figure 3a is schematic cross-sectional side view of a reflectivity testing rig;
Figure 3b is schematic cross-sectional side view of an irradiance testing rig;
Figure 4 is a graph of a wavelength spread of light output from the pest trap of Figure 1; and
Figure 5 is a bar chart of reflected irradiance for a variety of samples using the test rig of Figure 3a.

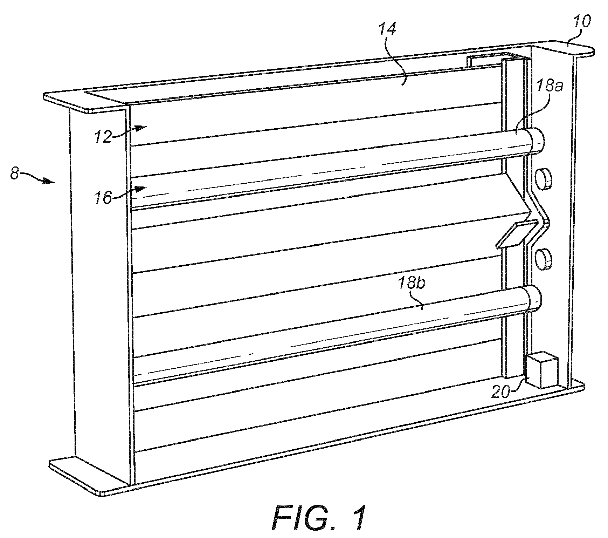

A pest trap 8 as shown in Figure 1 comprises a body 10, an immobilisation section 12 that includes a glueboard 14 and an attraction section 16 that includes one or more light sources 18a,b, which typically are chosen to output at least partly in the UV spectrum to attract pests, such as flies and moths. The pest trap 8 includes a power section 20 that receives power from an external source and provides power to the attraction section 16.

Effective pest traps combine both direct and reflected UV irradiance, to maximise output and attract flying insects. The UV is emitted directly to the environment from the light sources 18a,b and also UV from the light sources 18a,b that hits the glueboard 14 for example is reflected by the glueboard and then outwards to the environment.

Most prior art glueboards are made of a card backing material that is black or yellow, to which an adhesive is applied, then a cover sheet is placed over the adhesive. The cover sheet is removed before use of the glueboard. With glueboards of the prior art type, the reflected UV light is significantly reduced, because most of the light is absorbed by low reflectivity materials used within the glueboard 8.

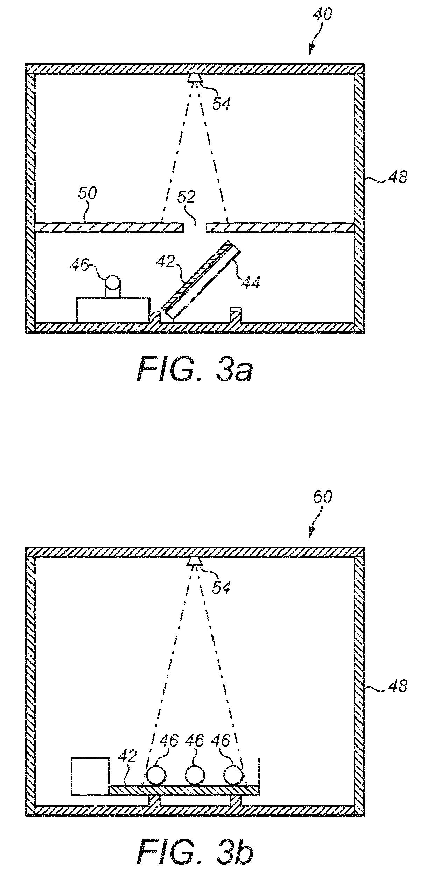

To gain an understanding of the reflectivity of different substrates for glueboards, the applicant used an indirect test rig 40 and a direct test rig 60 as shown in Figures 3a and 3b. Some parts of the test rigs are the same and like reference numerals have been used.

In Figure 3a the test rig measures reflective irradiance of a sample glueboard 42. All of the parts are housed in a chamber 48 that blocks out ambient light. The sample glueboard 42 is held at an angle of approximately 45 degrees to the horizontal by a support 44. A UV fluorescent tube 46 is mounted to the side of the sample glueboard 42. A shelf 50 is located above the sample glueboard 42 and the fluorescent tube 46. A gap 52 is present in the shelf 50 to allow light to pass from below the shelf 50 to an irradiance test probe 54 located on a ceiling of the chamber 48.

The relative locations of the sample glueboard 42, gap 52 and irradiance test probe 54 result in a line of sight between the irradiance test probe 54 and the sample glueboard 42. However, due to the narrowness of the gap 52 and the location of the UV tube 46 to the side of the sample glueboard 42, there is no line of sight from the UV tube 46 to the irradiance test probe 54. This allows the irradiance test probe 54 to measure only light that is reflected by the sample glueboard 42.

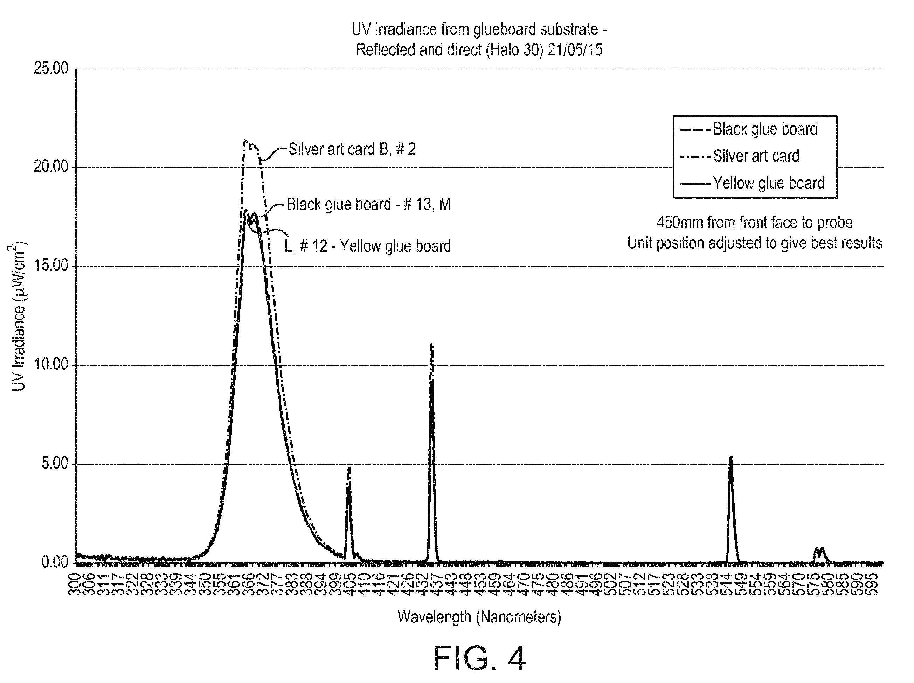

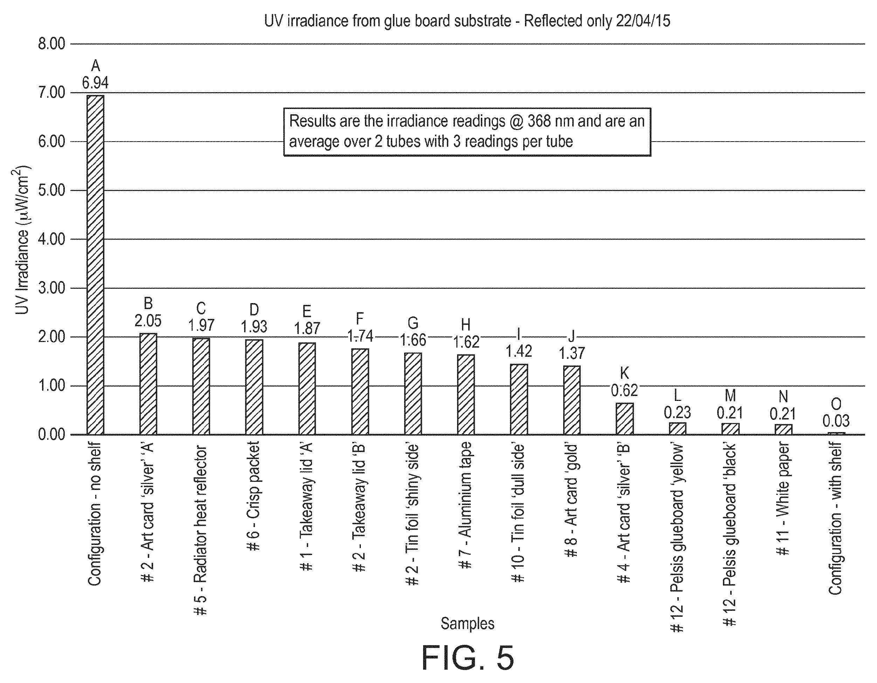

As mentioned above a glueboard is typically made of a card backing material that has a layer of glue applied to it. The materials listed below were tested for reflectivity in the rig 40 and the results are shown in Figures 4 and 5. "No shelf" refers to using the test rig 40 without the shelf 50 for comparison. "With shelf" refers to the shelf 50 being in place, but

The materials used were:
B - art card silver A,
C - radiator heat reflector material,
D - crisp packet,
E - takeaway lid A, t
F - takeaway lid B,
G - aluminium foil "shiny" side,
H - aluminium tape,
I - aluminium foil "dull" side,
J - art card gold,
K - art card silver B, P
L - Pelsis glueboard yellow,
M - Pelsis glueboard black,
N - white paper

L and M refer to the standard prior art glueboards of the applicant.

The results are the irradiance readings measured at 368nm and are an average over two tubes with three readings per tube. The results on the chart in figure 5 are shown in microWatts per square centimetre.

As can be seen from the results, there is a marked increase the reflected energy from the materials not previously used as a substrate for a glueboard. The results indicate the new materials can provide an irradiance of greater than 0.25 microWatts per square centimetre for the test rig 40 described, which is a good improvement on the existing materials L and M.

The test rig 60 does away with the shelf 50 and so there is no blocking of light between the three UV tubes 46 shown and the UV irradiance probe 54. The glueboard material 42 is placed beneath the UV tubes 46 in a similar fashion to the arrangement in a pest trap.

The results for material B, L and M above are shown in Figure 4. A spectrum is shown in the graph, showing that the light output peaks at about 368nm. The material B (silver art card "A") shows good light levels reaching the irradiance probe 54.

The results for those materials are tabulated below for both test rigs 40 and 60.

| **Test** | **Black Substrate Irradiance (microW/cm²)** | **Yellow Substrate Irradiance (microW/cm²)** | **Reflective Substrate Irradiance (microW/cm²)** |
|---|---|---|---|
| Reflection Only | 0.21 | 0.23 | 2.05 |
| Reflection and Direct | 17.58 | 17.29 | 21.16 |

It can be seen from the above results that much improved levels of reflected light can be achieved for a more reflective glueboard. This will result in a greater light output from a pest trap with a glueboard having a reflectivity greater than 0.25 microWatts per square centimetre according to the test described above. The greater light output will attract more pests, or allow a reduction in the power of a light source for a comparable pest catch.

The use of a silvered exterior face, which can be an aluminium layer, beneath the adhesive layer is beneficial to the reflectance measured and the light output of a pest trap incorporating the glueboard.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A flying pest trap comprising an attraction section, an immobilisation section, a body section adapted to retain the attraction section and the immobilisation section, and a power section adapted to provide power to the attraction section, wherein the immobilisation section incorporates a glueboard having a silvered exterior face on a substrate thereof, and a layer of adhesive is located on the silvered exterior face.

2. A flying pest trap according to claim 1, wherein the reflective irradiance of the immobilisation section is at least 0.25 microWatts per square centimetre when measured by the indirect test rig described herein.

3. A flying pest trap according to claim 1 or claim 2, wherein the reflective irradiance of the immobilisation section is at least 0.5 microWatts per square centimetre when measured by the indirect test rig described herein.

4. A flying pest trap according to any preceding claim, wherein the reflective irradiance of the immobilisation section is at least 2.0 microWatts per square centimetre when measured by the indirect test rig described herein.

5. A flying pest trap according to any preceding claim, wherein the silvered exterior face is a metalized layer.

6. A flying pest trap according to any preceding claim, wherein the silvered exterior face is an aluminium foil layer.

7. A flying pest trap according to any preceding claim, wherein the silvered exterior face is provided under a transparent cover layer.

8. A flying pest trap according to any preceding claim, wherein the silvered exterior face comprises a support layer.

9. A flying pest trap according to any preceding claim, wherein the attraction section incorporates a UV light source.

10. An immobilisation element for a flying pest trap, the immobilisation element comprising a backing section and an adhesive section applied to a front face of the backing section, wherein the immobilisation section incorporates a glueboard having a silvered exterior face on a substrate thereof, and a layer of adhesive is located on the silvered exterior face.

11. An immobilisation element according to claim 11, wherein the reflective irradiance of the immobilisation section is at least 0.25 microWatts per square centimetre when measured by the indirect test rig described herein.
